# EUROPEAN PATENT APPLICATION

(11) **EP 3 278 856 A1**
(43) Date of publication of application: **07.02.2018**
(21) Application number: 16772753.6
(22) Date of filing: 28.03.2016
(51) Int. Cl.: B01D 29/66, A01G 25/02, B01D 24/48, B01D 29/01, B01D 29/60

(54) **FILTRATION DEVICE, SPRAY DEVICE PROVIDED WITH SAME, AND FILTRATION METHOD**

(30) Priority: 02.04.2015 JP 2015075683
(71) Applicant: Aska Electric Co., Ltd., Kagoshima-shi, Kagoshima 891-0150 (JP)
(72) Inventor: SAWAYAMA Morimitsu, Kagoshima-shi Kagoshima 891-0150 (JP); FUKUTOME Mikio, Tarumizu-shi Kagoshima 891-2112 (JP)
(74) Representative: Isarpatent
(86) International application number: PCT/JP2016/059962
(87) International publication number: WO 2016/158872

(57) **Abstract**

[Object]

The present invention provides a filtering apparatus, a sprinkling apparatus using the filtering apparatus, and a filtering method by which a state where filtering sections are not clogged can be maintained by filtering out foreign matter such as water scale during continuous water feeding and cleaning and discharging the filtered-out foreign matter at each timing of restart of water feeding, and weakening and unexpected stoppage of water jetting due to foreign matter clogging the filtering sections can be prevented.

[Solution Means]

A filtering apparatus A includes a liquid passage chamber 1 including a control panel 11 provided with a liquid lead-in port 10 into which a flowing liquid flows, and liquid passage holes 110 and 111, and an initial moving plug body 12 that closes the liquid passage hole 110, 111, a drainage chamber 2 provided to be continuous with the liquid passage chamber 1 and including compartment chambers 20 and 21 provided corresponding to the liquid passage holes 110 and 111, and following plug bodies 24 and 25 that close drainage ports 22 and 23 formed in the compartment chambers 20 and 21, and a recirculation chamber 3 that is provided to be continuous with the drainage chamber 2, and has filtering sections that communicate with the compartment chambers 20 and 21 and filter a flowing liquid.

## Description

### Technical Field

The present invention relates to a filtering apparatus, a sprinkling apparatus including the filtering apparatus, and a filtering method. In detail, the present invention relates to a filtering apparatus, a sprinkling apparatus using the filtering apparatus, and a filtering method by which a state where filtering sections are not clogged can be maintained by filtering out foreign matter such as water scale during continuous water feeding and cleaning and discharging the filtered-out foreign matter at each timing of restart of water feeding, and weakening and unexpected stoppage of water jetting due to foreign matter clogging the filtering sections can be prevented.

### Background Art

At present, sprinklers are used for watering lawns, etc., irrigation facilities, and frost protection for agricultural products.

By installing a sprinkler, plants and agricultural products can be automatically watered, and this saves manpower in performing watering, so that sprinklers have become essential facilities at locations needing watering.

However, when a sprinkler is continuously used, foreign matter accumulates inside the sprinkler, etc., and the sprinkler may be broken. If the sprinkler is broken, watering around the sprinkler becomes impossible, and in summer, plants and agricultural products may die or, in winter, plants and agricultural products may be damaged by frost, etc.

In particular, in a tea plantation (tea garden), when tea leaves are frosted, new sprouts may be frozen and cells may be damaged and killed, and if this makes it impossible to harvest the first tea leaves of the season, loss to a tea farmer will be heavy.

As a watering apparatus to protect tea plants from such frost damage, for example, as shown in Patent Literature 1, "a watering apparatus for a tea garden" is disclosed which includes a sprinkler made by using a light material such as a vinyl tube and buried in a tea plantation, and performs watering by automatically pushing up an inner tube of the sprinkler buried in the earth by utilizing a pressure of a pump when necessary.

### Citation List

### Patent Literature

Patent Literature 1: Japanese Published Unexamined Utility Model Application No. H05-63252

### Summary of Invention

### Technical Problem

However, the utility model disclosed in Patent Literature 1 has the following problem. That is, when the sprinkler according to Patent Literature 1 is continuously used, foreign matter such as water scale accumulates inside the apparatus, and may clog a water jet port and obstruct the water flow, and cause insufficient watering.

As a countermeasure, it is also possible that foreign matter inside the apparatus is periodically manually removed, however, the number of sprinklers to be installed in a tea plantation is approximately 100 per hectare (approximately 10 per tan [1 tan = approximately 1000 m²]), and the work to disassemble all these sprinklers and remove foreign matter inside the sprinklers imposes a heavy burden on aging agriculture workers. Regarding the above-mentioned frost damage on tea leaves, significant damage is caused by stoppage of watering caused by one-time clogging, so that, it is obvious that such a countermeasure is insufficient.

The present invention was made in view of the above-described circumstances, and an object thereof is to provide a filtering apparatus, a sprinkling apparatus including the filtering apparatus, and a filtering method by which a state where filtering sections are not clogged can be maintained by filtering out foreign matter such as water scale during continuous water feeding and cleaning and discharging the filtered-out foreign matter at each timing of restart of water feeding, and weakening and unexpected stoppage of water jetting due to foreign matter clogging the filtering sections can be prevented.

### Solution to Problem

In order to attain the above-described object, a filtering apparatus according to the present invention includes a liquid passage chamber formed with a liquid lead-in port into which a flowing liquid flows, and including a control panel that is provided with a plurality of liquid passage holes into which the flowing liquid which has flowed in from the liquid lead-in port flows, and an initial moving plug body that reaches any one of the liquid passage holes while being guided by a flow of the flowing liquid when the flowing liquid flows in and closes the one liquid passage hole, a drainage chamber provided to be continuous with the liquid passage chamber and including a plurality of compartment chambers provided corresponding to the liquid passage holes and each having a drainage port to discharge the flowing liquid to the outside, and following plug bodies each of which reaches the drainage port while being guided by a flow of the flowing liquid when the flowing liquid flows in and closes the drainage port, and a recirculation chamber provided to be continuous with the drainage chamber and including a connecting means that connects a jetting means to jet the flowing liquid, and filtering sections that communicate with each of the plurality of compartment chambers between the recirculation chamber and the drainage chamber and filter the flowing liquid which has flowed in from the compartment chambers.

Here, since the liquid lead-in port into which a flowing liquid flows is formed, a flowing liquid can be flowed into the filtering apparatus from the outside.

Since the liquid lead-in port into which a flowing liquid flows is formed and an initial moving plug body that closes the liquid lead-in port in a state before a flowing liquid flows in is provided, when a flowing liquid starts to flow in, the initial moving plug body can be directly pushed up by the flowing liquid that flows in.

Here, the liquid lead-in port 10 is not limited to one in number, and a plurality of liquid lead-in ports may be provided.

Since the initial moving plug body that reaches any one of the liquid passage holes while being guided by a flow of a flowing liquid when the flowing liquid flows in and closes the liquid passage hole, and following plug bodies each of which reaches the drainage port while being guided by a flow of a flowing liquid when the flowing liquid flows in and closes the drainage port, are provided, a following plug body inside a compartment chamber corresponding to a liquid passage hole closed by the initial moving plug body stays around the liquid passage hole without being guided, and a following plug body inside a compartment chamber corresponding to a liquid passage hole other than the liquid passage hole closed by the initial moving plug body can float by being guided by the flow of the flowing liquid.

In the liquid passage chamber formed with the liquid lead-in port into which a flowing liquid flows, and including the control panel that is provided with the plurality of liquid passage holes into which the flowing liquid which has flowed in from the liquid lead-in port flows, and the initial moving plug body that reaches any one of the liquid passage holes while being guided by a flow of the flowing liquid when the flowing liquid flows in and closes the liquid passage hole, the initial moving plug body can close any one of the liquid passage holes at random.

Since the drainage chamber is provided to be continuous with the liquid passage chamber, a flowing liquid which has flowed into the liquid passage chamber can be flowed into the drainage chamber.

Through the drainage port to discharge a flowing liquid to the outside, a flowing liquid accumulated in the drainage chamber can be discharged.

Since the control panel provided with the plurality of liquid passage holes into which a flowing liquid which has flowed in from the liquid lead-in port flows, the initial moving plug body that reaches any one of the liquid passage holes while being guided by a flow of a flowing liquid when the flowing liquid flows in and closes the liquid passage hole, and the plurality of compartment chambers provided corresponding to the liquid passage holes and each having a drainage port to discharge a flowing liquid to the outside, are provided, a flowing liquid inside the liquid passage chamber hardly flows into a compartment chamber corresponding to a liquid passage hole closed by the initial moving plug body, and a flowing liquid inside the liquid passage chamber can be flowed into a compartment chamber other than the compartment chamber corresponding to the liquid passage hole closed by the initial moving plug body.

Since the control panel provided with the plurality of liquid passage holes into which a flowing liquid which has flowed in from the liquid lead-in port flows, the initial moving plug body that reaches any one of the liquid passage holes while being guided by a flow of the flowing liquid when the fluid flows in and closes the liquid passage hole, and the following plug bodies each of which reaches the drainage port while being guided by a flow of the flowing liquid when the flowing liquid flows in and closes the drainage port, are provided, a following plug body that is housed in a compartment chamber corresponding to a liquid passage hole other than a liquid passage hole closed by the initial moving plug body is pushed up by a flowing liquid flowing in from the liquid passage hole, and floats inside the compartment chamber and can close the drainage port.

Since the control panel provided with the plurality of liquid passage holes into which a flowing liquid which has flowed in from the liquid lead-in port flows, the initial moving plug body that reaches any one of the liquid passage holes while being guided by a flow of the flowing liquid when the fluid flows in and closes the liquid passage hole, and the following plug bodies each of which reaches the drainage port while being guided by a flow of the flowing liquid when the flowing liquid flows in and closes the drainage port, are provided, the initial moving plug body closes one of the liquid passage holes at random, and probabilities of closing the respective liquid passage holes become substantially equal to each other.

Since the recirculation chamber is provided to be continuous with the drainage chamber, a flowing liquid which has flowed into the drainage chamber can be flowed into the recirculation chamber.

By the recirculation chamber including a connecting means that connects a jetting means to jet a flowing liquid, a jetting means such as a nozzle can be connected.

By the filtering sections that communicate with each of the plurality of compartment chambers between the recirculation chamber and the drainage chamber and filters the flowing liquid which has flowed in from the compartment chambers, foreign matter contained in the flowing liquid can be removed.

Next, a flow of operation of the filtering apparatus provided by the above-described actions is described.

When a flowing liquid is led into the liquid lead-in port from an initial state where the initial moving plug body closes the liquid lead-in port and the respective following plug bodies close the respective liquid passage holes of the control panel inside the respective compartment chambers, first, the initial moving plug body floats up according to the flowing liquid, and is guided by any one of flows toward the respective liquid passage holes inside the liquid passage chamber and closes the liquid passage hole at random.

Through a liquid passage hole other than the liquid passage hole closed by the initial moving plug body, the flowing liquid flows into a compartment chamber corresponding to the liquid passage hole, and the following plug body floats up and is guided by the flow toward the drainage port and closes the drainage port. Accordingly, the flowing liquid passes through the above-described compartment chamber of the drainage chamber, and is filtered by the filtering section corresponding to this compartment chamber and flows into the recirculation chamber.

To the recirculation chamber, a jetting means such as a nozzle is fitted in normal use, so that a liquid pressure inside the recirculation chamber connected to the jetting means is increased at once by flowing of the flowing liquid into the recirculation chamber. On the other hand, the drainage port of the compartment chamber corresponding to the liquid passage hole closed by the initial moving plug body is open since the following plug body has not moved yet, and the liquid pressure inside the recirculation chamber is easily released as a flow toward the drainage port from the recirculation chamber through the filtering section corresponding to this compartment chamber.

Accordingly, a flow of the liquid toward the drainage port from the recirculation chamber through the filtering section corresponding to this compartment chamber is generated and separates adhered foreign matter which has been filtered out by the filtering section by previous water feeding into the inside of the compartment chamber, and the foreign matter is discharged to the outside from the drainage port together with the flowing liquid.

By the flowing liquid which has flowed into the compartment chamber at this time, the following plug body inside the compartment chamber corresponding to the liquid passage hole closed by the initial moving plug body is floated up, and guided by the flowing liquid flowing toward the drainage port and closes the drainage port. It should be noted that the movement up to this point from flowing-in of the flowing liquid from the liquid lead-in port is performed momentarily or in a very short time.

By the liquid pressure of the flowing liquid continuously led-in from the liquid lead-in port, the attached state of the initial moving plug body to the liquid passage hole of the control panel and the attached states of the respective following plug bodies to the respective drainage ports are maintained, and the flowing liquid that passes through the compartment chamber corresponding to the liquid passage hole other than the liquid passage hole closed by the initial moving plug body passes through and is filtered by the filtering section and flows to the jetting means side.

It should be noted that the liquid passage hole to be closed by the initial moving plug body is selected at random, so that probabilities of closing the respective liquid passage holes become substantially equal to each other, so that at the filtering sections corresponding to the plurality of compartment chambers, foreign matter is separated from the filtering sections in order at the timing of the start of periodic liquid feeding. Accordingly, the filtering sections can be prevented from being increasingly clogged by filtered-out foreign matter, and weakening and unexpected stoppage of water jetting due to clogging of the filtering sections can be prevented.

In a case where the initial moving plug body closes the liquid passage hole while partially securing a liquid passing state, a flowing liquid can be flowed in even from the liquid passage hole closed by the initial moving plug body.

In a case where an initial moving plug body is provided to be lighter in weight than the following plug bodies, the initial moving plug body can be guided more quickly than the following plug bodies.

In order to solve the above-described problem, a filtering apparatus according to the present invention includes a drainage chamber including a plurality of compartment chambers provided corresponding to a plurality of liquid passage holes any one of which is closed at random and into which a flowing liquid flows and each having a drainage port to discharge the flowing liquid to the outside, and plug bodies each of which reaches the drainage port while being guided by a flow of the flowing liquid when the flowing liquid flows in and closes the drainage port, and
a recirculation chamber provided to be continuous with the drainage chamber and including a connecting means that connects a jetting means to jet the flowing liquid, and filtering sections that communicate with each of the plurality of compartment chambers between the recirculation chamber and the drainage chamber, and filter the flowing liquid which has flowed in from the compartment chambers.

By the compartment chambers provided corresponding to the plurality of liquid passage holes any one of which is closed at random and into which a flowing liquid flows, probabilities that flowing water flows into the respective compartment chambers can be made substantially equal to each other.

By the plurality of compartment chambers each having a drainage port formed therein to discharge a flowing liquid to the outside, and the plug bodies each of which reaches the drainage port while being guided by a flow of a flowing liquid when the flowing liquid flows in and closes the drainage port, a flowing liquid can be prevented from flowing out of the drainage port when the flowing liquid flows in from the liquid passage hole, and a flowing liquid inside the compartment chamber can be flowed out of the drainage port in a state before the flowing liquid flows in from the liquid passage hole.

By the recirculation chamber provided to be continuous with the drainage chamber, a flowing liquid which has flowed into the drainage chamber can be distributed to the recirculation chamber.

By the recirculation chamber including a connecting means that connects a jetting means to jet a flowing liquid, a jetting means such as a nozzle can be connected to the filtering apparatus.

By the recirculation chamber provided to be continuous with the drainage chamber and including filtering sections that communicate with each of the plurality of compartment chambers between the recirculation chamber and the drainage chamber and filter a flowing liquid which has flowed in from the compartment chambers, foreign matter contained in a flowing liquid which has flowed in from the drainage chamber can be removed.

In order to solve the above-described problem, a sprinkling apparatus according to the present invention includes a liquid passage chamber formed with a liquid lead-in port into which a flowing liquid flows, and including a control panel that is provided with a plurality of liquid passage holes into which the flowing liquid which has flowed in from the liquid lead-in port flows, and an initial moving plug body that reaches any one of the liquid passage holes while being guided by a flow of the flowing liquid when the flowing liquid flows in and closes the one liquid passage hole, a drainage chamber provided to be continuous with the liquid passage chamber and including a plurality of compartment chambers provided corresponding to the liquid passage holes and each having a drainage port to discharge the flowing liquid to the outside, and following plug bodies each of which reaches the drainage port while being guided by a flow of the flowing liquid when the flowing liquid flows in and closes the drainage port, a recirculation chamber provided to be continuous with the drainage chamber and including a connecting means that connects a jetting means to jet the flowing liquid, and filtering sections that communicate with each of the plurality of compartment chambers between the recirculation chamber and the drainage chamber and filter the flowing liquid which has flowed in from the compartment chambers, and a jetting section connected to the recirculation chamber in a liquid-tight manner and including a jet hole.

By the jetting section connected to the recirculation chamber in a liquid-tight manner and including a jet hole, a flowing liquid flowing in from the recirculation chamber can be jetted from the jet hole.

In order to solve the above-described problem, a filtering method according to the present invention includes a step of closing a liquid passage hole selected at random among a plurality of liquid passage holes and obstructing a flowing liquid from flowing into a compartment chamber that corresponds to the closed liquid passage hole and corresponds to a filtering section to be cleaned, a step of filtering the flowing liquid flowing into a compartment chamber other than the compartment chamber corresponding to the filtering section to be cleaned, by the filtering section provided in the other compartment chamber, and a step of flowing the flowing liquid into the compartment chamber corresponding to the filtering section to be cleaned through the filtering section of the compartment chamber corresponding to the filtering section to be cleaned by a liquid pressure of the flowing liquid distributed to the other compartment chamber and discharging filter residue that fell off the filtering section to the outside together with the flowing liquid from the drainage port of the compartment chamber corresponding to the filtering section to be cleaned.

By the step of closing a liquid passage hole selected at random among a plurality of liquid passage holes, a flowing liquid can be flowed into the respective compartment chambers with substantially equal probability.

By the step of obstructing a flowing liquid from flowing into a compartment chamber corresponding to a closed liquid passage hole and corresponding to a filtering section to be cleaned, a flowing liquid can be flowed into a compartment chamber other than the compartment chamber corresponding to the filtering section to be cleaned.

By the step of closing a liquid passage hole selected at random among a plurality of liquid passage holes and obstructing a flowing liquid from flowing into a compartment chamber that corresponds to the closed liquid passage hole and corresponds to a filtering section to be cleaned, and the step of filtering a flowing liquid flowing into a compartment chamber other than the compartment chamber corresponding to the filtering section to be cleaned by the filtering section provided in the other compartment chamber, foreign matter contained in the flowing liquid which has flowed into the compartment chamber other than the compartment chamber corresponding to the filtering section to be cleaned can be removed.

By the step of closing a liquid passage hole selected at random among a plurality of liquid passage holes and obstructing a flowing liquid from flowing into a compartment chamber that corresponds to the closed liquid passage hole and corresponds to a filtering section to be cleaned, and the step of flowing the flowing liquid into the compartment chamber corresponding to the filtering section to be cleaned through the filtering section of the compartment chamber corresponding to the filtering section to be cleaned by a liquid pressure of the flowing liquid distributed to the other compartment chamber and discharging filter residue that fell off the filtering section to the outside together with the flowing liquid from the drainage port of the compartment chamber corresponding to the filtering section to be cleaned, the filtering sections of the respective compartment chambers can be cleaned with substantially equal probability.

By the step of closing a liquid passage hole selected at random among a plurality of liquid passage holes and obstructing a flowing liquid from flowing into a compartment chamber that corresponds to the closed liquid passage hole and corresponds to a filtering section to be cleaned, and the step of flowing the flowing liquid into the compartment chamber corresponding to the filtering section to be cleaned through the filtering section of the compartment chamber corresponding to the filtering section to be cleaned by a liquid pressure of the flowing liquid distributed to the other compartment chamber and discharging filter residue that fell off the filtering section to the outside together with the flowing liquid from the drainage port of the compartment chamber corresponding to the filtering section to be cleaned, the filtering sections of the respective compartment chambers are cleaned with substantially equal probability, so that the filtering sections can be prevented from being clogged.

In a case where the filtering method includes a step of feeding water to pass the flowing liquid through the respective compartment chambers and the respective filtering sections by closing the drainage port of the compartment chamber corresponding to the filtering section to be cleaned, a liquid pressure of the flowing liquid to be jetted becomes high, so that the flowing liquid can be jetted with force.

### Advantageous Effects of Invention

The present invention can provide a filtering apparatus, a sprinkling apparatus using the filtering apparatus, and a filtering method by which a state where filtering sections are not clogged can be maintained by filtering out foreign matter such as water scale during continuous water feeding and cleaning and discharging the filtered-out foreign matter at each timing of restart of water feeding, and weakening and unexpected stoppage of water jetting due to foreign matter clogging the filtering sections can be prevented.

### Brief Description of Drawings

Fig. 1 is a sectional view showing a structure of a filtering apparatus according to the present invention.
Fig. 2 is a sectional view of a sprinkler including a nozzle attached to the filtering apparatus according to the present invention.
Figs. 3 are views of a flow of flowing water inside the filtering apparatus according to the present invention with time.
Fig. 4 (a) to Fig. 4 (c) are sectional views showing a structure of a sprinkling apparatus with a nozzle using a filtering apparatus A according to a second embodiment of the present invention.

### Description of Embodiments

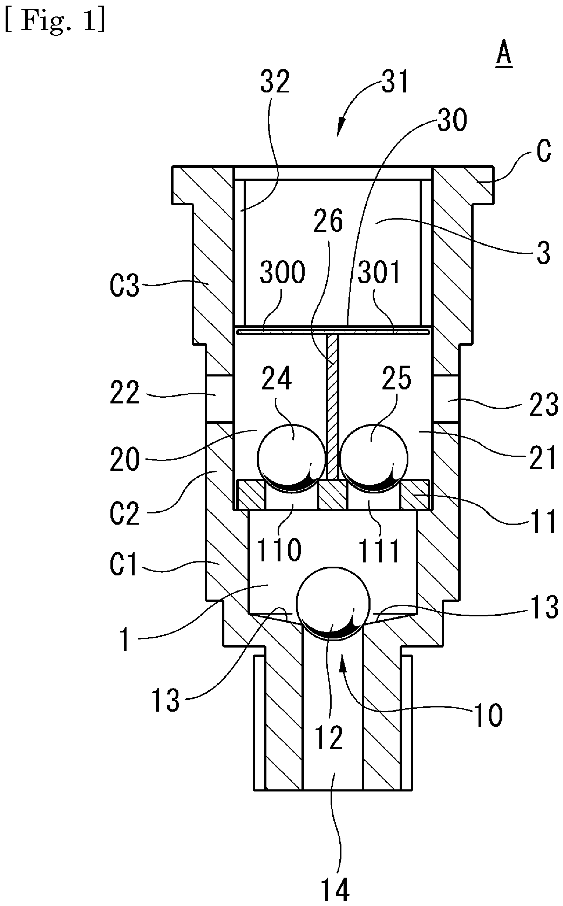

Hereinafter, embodiments of the present invention are described in detail with reference to Fig. 1 to Figs. 5 for understanding of the present invention.

### [First Embodiment]

A filtering apparatus A according to a first embodiment of the present invention is shown in Fig. 1.

The filtering apparatus A includes a liquid passage chamber 1 into which flowing water as an example of a flowing liquid is taken from a water source, a drainage chamber 2 into which the flowing water that flows in from the liquid passage chamber 1 is taken via a control panel 11, and a recirculation chamber 3 into which the flowing water is taken from the drainage chamber 2 via a filter 30.

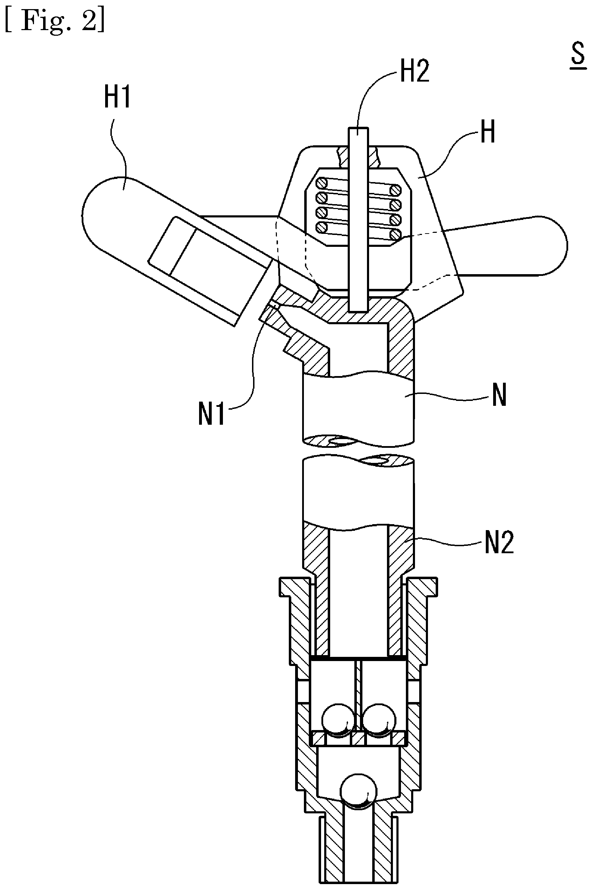

That is, flowing water which has flowed in from a liquid lead-in port 10 passes through the liquid passage chamber 1, the drainage chamber 2, and the recirculation chamber 3 in this order, and as shown in Fig. 2, in a case where a nozzle N as an example of a jetting means is connected to the recirculation chamber 3, the flowing water is jetted from the nozzle N.

The liquid passage chamber 1, the drainage chamber 2, and the recirculation chamber 3 are formed inside a substantially cylindrical casing C that is made of a liquid-tight material such as various metals and has a portion with a different diameter. It should be noted that, for convenience of description of the structure of the filtering apparatus according to the present invention, the casing C is divided into a circumferential wall C1 surrounding the liquid passage chamber 1, a circumferential wall C2 surrounding the drainage chamber 2, and a circumferential wall C3 surrounding the recirculation chamber 3, but the circumferential wall C1 through the circumferential wall C3 are provided integrally, and the circumferential walls C1 through C3 constitute the casing C as a whole.

### (Liquid passage chamber 1)

The liquid passage chamber 1 includes the liquid lead-in port 10 leading to a water conduit 14, a funnelform (funnel-shaped) bottom wall 13 downwardly inclined toward the liquid lead-in port 10, the circumferential wall C1 surrounding the liquid passage chamber 1, the control panel 11 having a liquid passage hole 110 and a liquid passage hole 111, and an initial moving plug body 12 having a spherical shape housed inside the liquid passage chamber 1.

At the substantially center of the bottom wall 13 of the liquid passage chamber 1, the liquid lead-in port 10 which has a substantially circular shape in a planar view and is opened toward the upper portion and into which flowing water flowing in from a water source flows is formed. The bottom wall 13 of the liquid passage chamber 1 is provided so as to incline downwardly at a predetermined angle toward the liquid lead-in port 10.

The cylindrical circumferential wall C1 is provided so as to rise from the rim of the bottom wall 13, and the control panel 11 is positioned so as to cover the vicinity of the opening of the upper end of the circumferential wall C1.

The control panel 11 is positioned between the liquid lead-in port 10 and the drainage chamber 2 which will be described later so as to face the liquid lead-in port 10. The control panel 11 is a circular disk, and is fixed between the liquid passage chamber 1 and the drainage chamber 2 inside the casing C so as to be substantially in internal contact with the inner surface of the casing C. On a diametrical line of the control panel 11, at two positions opposite across the center, circular liquid passage holes 110 and 111 are formed at equal distances from the center so as to penetrate vertically.

The liquid lead-in port 10 penetrates through the bottom wall 13 of the liquid passage chamber 1 and communicates with the water conduit 14, so that flowing water passes through the liquid lead-in port 10 and flows into the liquid passage chamber 1.

Inside the liquid passage chamber 1, the spherical initial moving plug body 12 is housed. A diameter of the initial moving plug body 12 is set to be larger than an inner diameter of the liquid lead-in port 10, so that in an initial state, the initial moving plug body 12 is positioned to be equidistant from the liquid passage hole 110 and the liquid passage hole 111 in a symmetrical direction, so that conditions of the liquid passage hole 110 and the liquid passage hole 111 with respect to the initial moving plug body 12 become substantially equal, and as a result, the liquid passage hole 110 and the liquid passage hole 111 are closed by the initial moving plug body 12 with substantially equal probability.

When flowing water flows into the liquid passage chamber 1, the initial moving plug body 12 is pushed up and reaches either one of the liquid passage hole 110 and the liquid passage hole 111 provided in the control panel 11 and closes the one liquid passage hole.

The liquid passage hole 110 and the liquid passage hole 111 are formed to be smaller in diameter than the initial moving plug body 12, and when the liquid passage hole 110 is closed by the initial moving plug body 12, the flowing water is obstructed from flowing into a compartment chamber 20 which will be described later, and when the liquid passage hole 111 is closed by the initial moving plug body 12, the flowing water is obstructed from flowing into a compartment chamber 21 which will be described later.

Here, the inclination angle of the bottom wall 13 is not particularly limited, and the bottom wall may not be inclined. In short, any structure is allowed as long as the initial moving plug body 12 automatically moves to a position to close the liquid lead-in port 10 at the center of the bottom wall 13 when water feeding is stopped.

The initial moving plug body 12 is not limited to one in number. It is only required that there is any other liquid passage hole that is not closed by the initial moving plug body than the liquid passage hole that is closed by the initial moving plug body, and a plurality of liquid passage holes may be provided.

It should be noted that it is also possible that one liquid passage hole is closed by the two or more initial moving plug bodies. In a case where the number of liquid passage holes provided is more than the two or more initial moving plug bodies (that is, three or more liquid passage holes are provided), a structure in which each liquid passage hole is closed by the two or more initial moving plug bodies can also be adopted.

The number of liquid passage holes is not limited to two. It is only required that there is any other liquid passage hole that is not closed by the initial moving plug body than the liquid passage hole that is closed by the initial moving plug body, and three or more liquid passage holes may be provided.

### (Drainage chamber 2)

The drainage chamber 2 includes the control panel 11 having the liquid passage hole 110 and the liquid passage hole 111, the circumferential wall C2 surrounding the drainage chamber 2, a drainage port 22 and a drainage port 23 provided to penetrate through the circumferential wall C2 in the inside-outside direction, the filter 30 that is provided at a position facing the control panel 11 and removes foreign matter from flowing water, and the compartment chamber 20 and the compartment chamber 21 formed by partitioning a space surrounded by the control panel 11, the circumferential wall C2, and the filter 30 by a partition wall 26. It should be noted that the filter 30 is made of a metal-made mesh material with a mesh size of approximately 1 mm (mesh size number: 14 to 18). It should also be noted that, the material of the filter 30 is not limited to the metal-made mesh material. For example, plastic mesh materials and mesh materials of various fibers may also be adopted.

The diameter of a following plug body 24 is formed to be larger than an inner diameter of the liquid passage hole 110 so that the following plug body 24 can close almost the entire liquid passage hole 110. In a state where the liquid passage hole 110 is closed by the following plug body 24, flowing water hardly leaks out from the liquid passage hole 110, so that the compartment chamber 20 can store the flowing water up to a port bottom portion of the drainage port 22 as an upper limit water level.

The diameter of a following plug body 25 is formed to be larger than an inner diameter of the liquid passage hole 111 so that the following plug body 25 can close the liquid passage hole 111. In a state where the liquid passage hole 111 is closed by the following plug body 25, the flowing water hardly leaks out from the liquid passage hole 111, so that the compartment chamber 21 can store the flowing water up to the port bottom portion of the drainage port 22 as an upper limit water level.

In a case where the initial moving plug body 12 pushed up by flowing water flowing into the liquid passage chamber 1 closes the liquid passage hole 110, the following plug body 24 is not pushed up so greatly by the flowing water but stays around the liquid passage hole 110. Accordingly, a lower portion of the liquid passage hole 110 is closed by the initial moving plug body 12 and an upper portion is closed by the following plug body 24, so that the flowing water is obstructed from flowing into the compartment chamber 20.

At this time, the flowing water that passed through the liquid passage chamber 1 flows in from the liquid passage hole 111 and pushes up the following plug body 25, and the following plug body 25 floats inside the compartment chamber 21. Accordingly, the flowing water flows into the compartment chamber 21.

At a position close to an upper portion of the circumferential wall C2 constituting the compartment chamber 21, the circular drainage port 23 is provided to penetrate through the circumferential wall C2 in the inside-outside direction. A part of the flowing water which has flowed into the compartment chamber 21 is discharged from the drainage port 23 to the outside, and the following plug body 25 pushed up together with this flowing water also reaches the drainage port 23 and then closes the drainage port 23.

When the drainage port 23 is closed by the following plug body 25, the flowing water rushes through the inside of the compartment chamber 21, and flows into the recirculation chamber 3 which will be described later while being filtered by the filter 30.

It should be noted that, in a case where the initial moving plug body 12 pushed up by the flowing water flowing into the liquid passage chamber 1 closes the liquid passage hole 111, the following plug body 25 is not pushed up so greatly by the flowing water but stays around the liquid passage hole 111. Accordingly, the flowing water is obstructed from flowing into the compartment chamber 21.

At this time, the flowing water that passed through the liquid passage chamber 1 flows in from the liquid passage hole 110 and pushes up the following plug body 24, and the following plug body 24 floats inside the compartment chamber 20. Accordingly, the flowing water flows into the compartment chamber 20.

At a position close to an upper portion of the circumferential wall C2 constituting the compartment chamber 20, the circular drainage port 22 is provided to penetrate through the circumferential wall C2 in the inside-outside direction. A part of the flowing water which has flowed into the compartment chamber 20 is discharged from the drainage port 22 to the outside, and the following plug body 24 pushed up together with this flowing water also reaches the drainage port 22 and then closes the drainage port 22.

When the drainage port 22 is closed by the following plug body 24, the flowing water rushes through the inside of the compartment chamber 20, and flows into the recirculation chamber 3 which will be described later while being filtered by the filter 30.

Here, the number of compartment chambers is not limited to two. It is only required that the number of chambers corresponds to the liquid passage holes of the control panel, and three or more compartment chambers may be provided.

The number of following plug bodies is not limited to two. It is only required that the number of following plug bodies corresponds to the number of compartment chambers, and three or more following plug bodies may be provided.

### (Recirculation chamber 3)

The recirculation chamber 3 includes the filter 30 through which flowing water that flows in from the drainage chamber 2 passes while being filtered, an opening portion 31 formed at a position facing the filter 30, a female threaded portion 32 to which the nozzle N as an example of a jetting means is screwed, and the circumferential wall C3 to be connected to the nozzle N in a liquid-tight manner.

A sprinkler S as a sprinkling apparatus is described with reference to Fig. 2.

The sprinkler S includes the filtering apparatus A and the nozzle N.

The nozzle N is made of a liquid-tight material such as various metals, and includes a substantially cylindrical water pipe N2 whose lower portion is opened. The nozzle N is connected to the recirculation chamber 3 of the filtering apparatus A.

At a lower end portion of the nozzle N, male threads (no sign is shown) are provided, and by screwing the male threads to the female threaded portion 32 provided on the inner surface of the circumferential wall C3, the nozzle N is connected to the filtering apparatus A in a liquid-tight manner. It should be noted that, as a method of connecting the nozzle N and the filtering apparatus A, other than the above-described threads, a rubber-made packing, etc., can also be adopted, however, the method is not limited to these.

At a tip end of the nozzle N, a nozzle head H is provided, and the nozzle head H is provided with a plate-shaped sprinkling plate H1 at a position near a jet orifice N1. By reciprocating motion of the nozzle head H in a circumferential direction around a rotary shaft H2, flowing water jetted from the jet orifice N1 is bounced by the sprinkling plate H1 and scattered.

A lower end of the nozzle N is deeply connected to the vicinity of the filter 30 of the recirculation chamber 3, so that it does not easily separate, and flowing water that passed through the drainage chamber 2 and was filtered by the filter 30 can be directly flowed into a water pipe N2 of the nozzle N.

In a case where the initial moving plug body 12 closes the liquid passage hole 110, the following plug body 25 is pushed up by flowing water flowing in from the liquid passage hole 111 and closes the drainage port 23, and the flowing water inside the liquid passage chamber 1 passes through the compartment chamber 21 and flows into the recirculation chamber 3 while being filtered by a filtering section 300 being a part of the filter 30 and closing the upper portion of the compartment chamber 21.

At this time, inside the recirculation chamber 3, the flowing water which has flowed in from the compartment chamber 21 tries to flow into the water pipe N2 of the nozzle N, however, the jet orifice N1 of the nozzle N is formed to be narrow, so that an amount of flowing water to be jetted from the jet orifice N1 is much smaller than an amount of flowing water flowing into the water pipe N2, so that liquid pressure inside the water pipe N2 and the compartment chamber 21 becomes high.

On the other hand, inside the compartment chamber 20, almost no flowing water flows in from the liquid passage hole 110, so that a liquid pressure generated by the flowing water becomes lower as compared with that in the water pipe N2 and the compartment chamber 21. Therefore, it is difficult for the flowing water inside the water pipe N2 to move toward the jet orifice N1 of the nozzle N, so that it changes direction and is forced and flowed into the compartment chamber 20.

At this time, through previous water feeding, foreign matter (filter residue) filtered out by the filtering section 300 being a part of the filter 30 and closing the upper portion of the compartment chamber 20 when the flowing water passed through the compartment chamber 20 adheres to the filtering section, and when the flowing water passes through the filtering section 300 into the compartment chamber 20 from the recirculation chamber 3 side, the flowing water passes through the filtering section 300 while separating the adhered foreign matter, and is discharged from the drainage port 22 together with the foreign matter.

On the other hand, in a case where the initial moving plug body 12 closes the liquid passage hole 111, the following plug body 24 is pushed up by the flowing water flowing in from the liquid passage hole 110 and closes the drainage port 22, and the flowing water inside the liquid passage chamber 1 passes through the compartment chamber 20 and flows into the recirculation chamber 3 while being filtered by the filtering section 300 being a part of the filter 30 and closing the upper portion of the compartment chamber 20.

At this time, inside the recirculation chamber 3, the flowing water which has flowed in from the compartment chamber 20 tries to flow into the water pipe N2 of the nozzle N, however, the jet orifice N1 of the nozzle N is formed to be narrow, so that an amount of flowing water to be jetted from the jet orifice N1 is much smaller than an amount of flowing water flowing into the water pipe N2, so that liquid pressure inside the water pipe N2 and the compartment chamber 20 becomes high.

On the other hand, inside the compartment chamber 21, almost no flowing water flows in from the liquid passage hole 111, so that a liquid pressure generated by the flowing water becomes lower as compared with that in the water pipe N2 and the compartment chamber 20. Therefore, it is difficult for the flowing water inside the water pipe N2 to move toward the jet orifice N1 of the nozzle N, so that it changes direction and is forced and flowed into the compartment chamber 21.

At this time, through previous water feeding, foreign matter (filter residue) filtered out by a filtering section 301 being a part of the filter 30 and closing the upper portion of the compartment chamber 21 when the flowing water passes through the compartment chamber 21 adheres to the filtering section, and when the flowing water passes through the filtering section 301 into the compartment chamber 21 from the recirculation chamber 3 side the flowing water passes through the filtering section 301 while separating the adhered foreign matter, and is discharged from the drainage port 23 together with the foreign matter.

The spherical following plug body 24 housed inside the compartment chamber 20 and the spherical following plug body 25 housed inside the compartment chamber 21 are formed to be heavier in weight as compared to the initial moving plug body 12.

Accordingly, in a case where the initial moving plug body 12 closes the liquid passage hole 110, the following plug body 25 is pushed up later than the initial moving plug body 12 and closes the drainage port 23. Similarly, in a case where the initial moving plug body 12 closes the liquid passage hole 111, the following plug body 24 is pushed up later than the initial moving plug body 12 and closes the drainage port 22.

That is, the drainage port 22 and the drainage port 23 can be prevented from being closed substantially simultaneously by earlier start of movements of the following plug body 24 and the following plug body 25 than the initial moving plug body 12.

It should be noted that the initial moving plug body is not necessarily limited to one which is made lighter in weight than the following plug bodies, but is only required to exert an effect such that the initial moving plug body closes the liquid passage hole 110 or the liquid passage hole 111 before the following plug body closes the drainage port. For example, it is also possible that the above-described effect is exerted by changing the size or the shape, etc.

### (Action)

Hereinafter, actions of the filtering apparatus A∼ and the sprinkler S as a sprinkling apparatus are further described in detail.

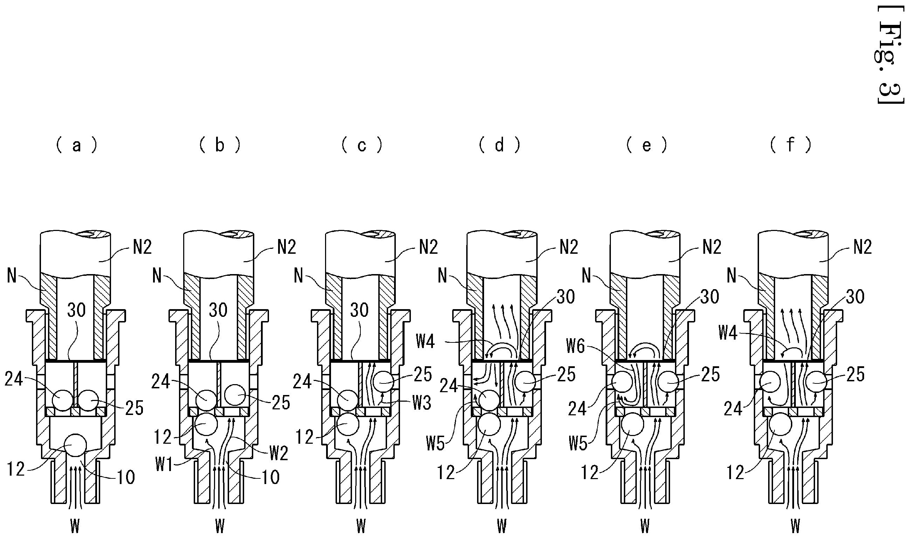

It should be noted that, in the following description, flowing water is described with reference to the arrows shown in Figs. 3, however, particularly in description of a momentary flow of flowing water, the flowing water does not always flow only in the route, and water in the route is pushed by the flowing water and acts in some cases.

As shown in Fig. 3(a), the filtering apparatus A is used basically in a state where the recirculation chamber 3 is set at the upper side and the casing C is oriented in the vertical direction. As in the case where the filtering apparatus is used to prevent a frost damage on tea leaves, under a situation in which sprinkling and sprinkling stoppage are periodically repeated, even in an initial state before sprinkling is started, normally, water is contained in a part of the region of the drainage chamber 2 (the lower side than the drainage holes 22 and 23), and a majority or the whole of the region of the liquid passage chamber 1.

The initial moving plug body 12 housed in the liquid passage chamber 1 is positioned so as to close the liquid lead-in port 10 that is at a deepest position by its own weight before flowing water flows in. The following plug body 24 housed in the compartment chamber 20 closes the liquid passage hole 110, and the following plug body 25 housed in the compartment chamber 21 closes the liquid passage hole 111.

It should be noted that, since the initial moving plug body 12 is at a position to close the liquid lead-in port 10, the initial moving plug body 12 is equidistant from the liquid passage hole 110 and the liquid passage hole 111 in an initial state, and by thus making the conditions equal, even if the initial moving plug body 12 is moved unexpectedly, the liquid passage hole 110 and the liquid passage hole 111 are closed with substantially equal probability in terms of results.

As shown in Fig. 3(b), when the flowing water flows into the liquid passage chamber 1 through the liquid lead-in port 10, the initial moving plug body 12 is pushed up by the flowing water and starts to float inside the liquid passage chamber 1. Inside the liquid passage chamber 1, there are a flow w1 that presses the initial moving plug body 12 against the liquid passage hole 110 by a liquid pressure, and a flow w2 that passes through the liquid passage hole 111.

Accordingly, it becomes almost impossible for the flowing water to flow into the compartment chamber 20 from the liquid passage hole 110. It should be noted that this movement of the initial moving plug body 12 until closing the liquid passage hole 110 is momentary, so that the following plug body 24 and the following plug body 25 do not move greatly.

Inside the liquid passage chamber 1, while a state where the initial moving plug body 12 is pressed against the liquid passage hole 110 is maintained, the flowing water passes through the liquid passage hole 111 and flows into the compartment chamber 21 according to the flow w2. At this time, closing of the liquid passage hole 110 by the initial moving plug body 12 is not complete, and slight water passage is secured.

As shown in Fig. 3(c), the following plug body 25 is pushed up by the flow w2 and floats inside the compartment chamber 21. The flowing water reaches the filter 30 according to the flow w2, and most of the flowing water passes through the filter 30 while being filtered and flows into the recirculation chamber 3.

On the other hand, a part of the flowing water generates a flow w3 to flow out of the drainage port 23 while being pushed back by the filter 30, etc., and flows out of the drainage port 23 to the outside. According to the flow w3, the following plug body 25 reaches the drainage port 23 and closes the drainage port 23. Accordingly, the flowing water hardly flows out of the drainage 23 to the outside.

When the drainage hole 23 is closed by the following plug body 25, the force of the flowing water flowing with the flow w2 increases and flows into the recirculation chamber 3 while being filtered when passing through the filtering section 301.

The flowing water which has flowed into the recirculation chamber 3 flows into the nozzle N while keeping its force, and tries to flow out of the jet orifice N1 of the nozzle N to the outside, however, since the jet orifice N1 is formed to be narrow, liquid pressure generated by the flowing water inside the water pipe N2 of the nozzle N and the recirculation chamber 3 increases.

On the other hand, the liquid passage hole 110 is substantially closed by the initial moving plug body 12 although slight water passage is secured, so that an amount of flowing water flowing into the compartment chamber 20 is much smaller than an amount of flowing water flowing into the compartment chamber 21, so that a liquid pressure generated by the flowing water inside the compartment chamber 20 becomes lower as compared to the liquid pressure inside the nozzle N and inside the recirculation chamber 3. Therefore, as shown in Fig. 3(d), a flow w4 flowing from the inside of the nozzle N and the recirculation chamber 3 toward the compartment chamber 20 is generated, and a part of flowing water inside the nozzle N and inside the recirculation chamber 3 passes through the filtering section 300 and flows into the compartment chamber 20.

At this time, to a surface on the compartment chamber 20 side of the filtering section 300 in contact with the compartment chamber 20, foreign matter (filter residue) filtered out by the filter 30 when the flowing water passed through the compartment chamber 20 at the time of previous water feeding adheres, and the foreign matter is separated toward the inside of the compartment chamber 20 by flowing-in of the flowing water into the compartment chamber 20 according to the flow w4 and discharged together with the flowing water from the drainage port 22 to the outside. It should be noted that the movement up to this point also momentarily occurs after the start of water feeding from the water lead-in port 10.

At this point in time, the following plug body 24 starts to float according to a flow w5 flowing from the liquid passage chamber 1 toward the compartment chamber 20 in a gap between the initial moving plug body 12 and the liquid passage hole 110. It should be noted that attachment of the initial moving plug body 12 to the liquid passage hole 110 and attachment of the following plug body 25 to the drainage port 23 are maintained.

As shown in Fig. 3(e), inside the compartment chamber 20, in addition to the flow w4 and the flow w5, a flow w6 is generated which passes through the filtering section 300 and flows down along the surface of the following plug body 24, and then collides with and is pushed back by the control panel 11 and moves up.

By these three flows w4, w5, and w6, the following plug body 24 is pushed up, floats inside the compartment chamber 20, and is guided by a flow toward the drainage port 22 and reaches the drainage port 22, and closes the drainage port 22.

Then, as shown in Fig. 3(f), a state is brought about where the initial moving plug body 12 closes most of the liquid passage hole 110, the following plug body 25 closes most of the drainage port 23, and further, the following plug body 24 closes most of the drainage port 22. By a liquid pressure generated by flowing-in of the flowing water from the liquid lead-in port 10, this state is maintained, and continuous water passage from the liquid passage chamber 1 to the nozzle N through the drainage chamber 2 and the recirculation chamber 3 is enabled, and water is continuously jetted from the jet orifice N1.

At this time, foreign matter contained in the flowing water is filtered out by the filtering section 301 on the compartment chamber 21 side, so that the foreign matter can be prevented from flowing into the nozzle N, and without clogging the jet orifice N1 by the foreign matter, the flowing water can be continuously jetted and sprinkled around the apparatus.

After a required time elapses, when flowing-in of the flowing water is stopped, no water flows in from the liquid lead-in port 10, so that the flow w1 that has continuously pressed the initial moving plug body 12 disappears. Accordingly, the initial moving plug body 12 starts to move down due to its own weight, and then be positioned so as to close the liquid lead-in port 10 after rolling along the inclined surface of the bottom wall 13.

Similarly, when flowing-in of the flowing water is stopped, the liquid pressure inside the compartment chamber 20 or the compartment chamber 21 corresponding to the following plug body 24 or the following plug body 25 also decreases. Accordingly, the following plug body 24 or the following plug body 25 separates from the drainage port 22 or the drainage port 23 and starts to move down due to its own weight, and then be positioned so as to close the corresponding liquid passage hole 110 or liquid passage hole 111.

Accordingly, all of the flows inside the filtering apparatus A disappear and the filtering apparatus A returns to the state before the flowing liquid flows in.

When water feeding is started next, in a case where the initial moving plug body 12 closes not the liquid passage hole 110 but the liquid passage hole 111, inversely with the above-described movement, foreign matter adhered to the surface on the compartment chamber 21 side of the filtering section 301 in contact with the compartment chamber 21 is separated and the filter 30 is accordingly cleaned, and the foreign matter is discharged from the drainage port 23 together with the flowing water.

It should be noted that it is at random whether the initial moving plug body 12 closes the liquid passage hole 110 or the liquid passage hole 111, so that probabilities of closing the liquid passage hole 110 and the liquid passage hole 111 become substantially equal. Therefore, the filtering sections 300 and 301 of the filter 30 are substantially equally repeatedly cleaned, so that the whole filter 30 can be continuously prevented from being clogged.

In addition, a reduction in jetting amount or stoppage of jetting from the nozzle due to clogging of the filter 30 can be prevented.

### [Second Embodiment]

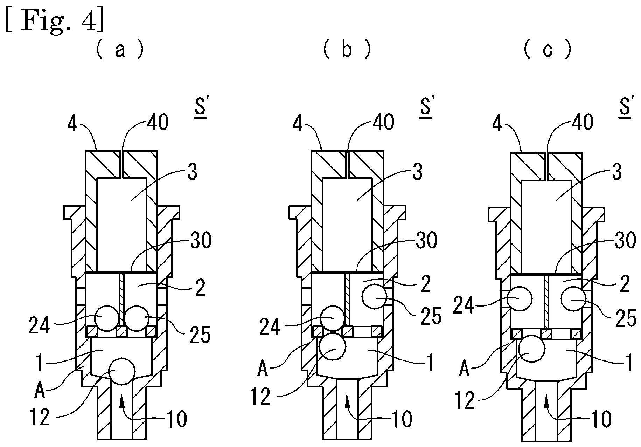

A sprinkling apparatus S' including the filtering apparatus A according to a second embodiment of the present invention is shown in Fig. 4(a) to Fig. 4(c).

As shown in Fig. 4(a), the filtering apparatus A includes a liquid passage chamber 1 into which flowing water is taken from a water source, a drainage chamber 2 into which the flowing water that flows in from the liquid passage chamber 1 is taken via a control panel 11, and a recirculation chamber 3 into which flowing water is taken from the drainage chamber 2 via a filter 30 and which is connectable to a nozzle 4 which will be described later.

The nozzle 4 has a substantially cylindrical shape, and is provided with a narrow jet hole 40 at an upper portion. The nozzle 4 is used by being fitted to the recirculation chamber 3 basically in a posture in which the jet hole 40 is directed upward.

An outer diameter of the nozzle 4 substantially matches an inner diameter of the recirculation chamber 3, and when a lower portion of the nozzle 4 is fitted to the recirculation chamber 3, the recirculation chamber 3 and the nozzle 4 are joined in a liquid-tight manner.

Flowing water from a water source flows into the liquid passage chamber 1 from a liquid lead-in port 10. Before flowing water flows into the liquid passage chamber 1, as shown in Fig. 4(a), the initial moving plug body 12 closes the liquid lead-in port 10, and the following plug body 24 and the following plug body 25 respectively close the liquid passage hole 110 and the liquid passage hole 111.

As shown in Fig. 4(b), flowing water which has flowed in from the liquid lead-in port 10 pushes up the initial moving plug body 12, and the initial moving plug body 12 closes the liquid passage hole 110, and then, the following plug body 25 is pushed up and closes the drainage port 23. The flowing water passes through the compartment chamber 21 and flows into the recirculation chamber 3, and at the same time, flows into the compartment chamber 20, and is discharged from the drainage port 22 together with foreign matter.

Thereafter, as shown in Fig. 4(c), the following plug body 24 also closes the drainage port 22, flowing-out from the drainage port 22 stops, and the flowing water is jetted with force from the jet hole 40 of the nozzle 4 fitted to the recirculation chamber 3.

Since the nozzle 4 is fitted to the recirculation chamber 3, when the filtering apparatus A is broken, the sprinkler S' can be continuously used by replacing only the filtering apparatus A.

It should be noted that, as a means to fit the nozzle 4 to the recirculation chamber 3, a rubber-made packing, etc., can also be used, or a screwing method can also be used.

As described above, in the filtering apparatus A and sprinkling apparatus, a state where filtering sections are not clogged can be maintained by filtering out foreign matter such as water scale during continuous water feeding and cleaning and discharging the filtered-out foreign matter at each timing of restart of water feeding, so that stoppage of water jet due to foreign matter clogging the filtering sections and/or jet orifice can be prevented.

**Reference Signs List**

| | |
|---|---|
| Filtering apparatus | A |
| Liquid passage chamber | 1 |
| Drainage chamber | 2 |
| Recirculation chamber | 3 |
| Nozzle | 4 |
| Liquid lead-in port | 10 |
| Control panel | 11 |
| Initial moving plug body | 12 |
| Bottom wall | 13 |
| Water conduit | 14 |
| Compartment chamber | 20 |
| Compartment chamber | 21 |
| Drainage port | 22 |
| Drainage port | 23 |
| Filter | 30 |
| Opening portion | 31 |
| Female threaded portion | 32 |
| Jet hole | 40 |
| Liquid passage hole | 110 |
| Liquid passage hole | 111 |
| Filtering section | 300 |
| Filtering section | 301 |
| Casing | C |
| Nozzle | N |
| Jet orifice | N1 |
| Water pipe | N2 |
| Sprinkler | S |
| Flow | W1, W2, W3, W4, W5, W6 |

## Claims

1. A filtering apparatus comprising:
a liquid passage chamber formed with a liquid lead-in port into which a flowing liquid flows, and including a control panel that is provided with a plurality of liquid passage holes into which the flowing liquid which has flowed in from the liquid lead-in port flows, and an initial moving plug body that reaches any one of the liquid passage holes while being guided by a flow of the flowing liquid when the flowing liquid flows in and closes the one liquid passage hole;
a drainage chamber provided to be continuous with the liquid passage chamber and including a plurality of compartment chambers provided corresponding to the liquid passage holes and each having a drainage port to discharge the flowing liquid to the outside, and following plug bodies each of which reaches the drainage port while being guided by a flow of the flowing liquid when the flowing liquid flows in and closes the drainage port; and
a recirculation chamber provided to be continuous with the drainage chamber and including a connecting means that connects a jetting means to jet the flowing liquid, and filtering sections that communicate with each of the plurality of compartment chambers between the recirculation chamber and the drainage chamber and filter the flowing liquid which has flowed in from the compartment chambers.

2. The filtering apparatus according to Claim 1, wherein
the initial moving plug body closes the liquid passage hole while partially securing a liquid passing state.

3. The filtering apparatus according to Claims 1 and 2, wherein
the initial moving plug body is provided to be lighter in weight than the following plug bodies.

4. A filtering apparatus comprising:
a drainage chamber including a plurality of compartment chambers provided corresponding to a plurality of liquid passage holes any one of which is closed at random and into which a flowing liquid flows, and each having a drainage port to discharge the flowing liquid to the outside, and plug bodies each of which reaches the drainage port while being guided by a flow of the flowing liquid when the flowing liquid flows in and closes the drainage port; and
a recirculation chamber provided to be continuous with the drainage chamber and including a connecting means that connects a jetting means to jet the flowing liquid, and filtering sections that communicate with each of the plurality of compartment chambers between the recirculation chamber and the drainage chamber, and filter the flowing liquid which has flowed in from the compartment chambers.

5. A sprinkling apparatus comprising:
a liquid passage chamber formed with a liquid lead-in port into which a flowing liquid flows, and including a control panel that is provided with a plurality of liquid passage holes into which the flowing liquid which has flowed in from the liquid lead-in port flows, and an initial moving plug body that reaches any one of the liquid passage holes while being guided by a flow of the flowing liquid when the flowing liquid flows in and closes the one liquid passage hole;
a drainage chamber provided to be continuous with the liquid passage chamber and including a plurality of compartment chambers provided corresponding to the liquid passage holes and each having a drainage port to discharge the flowing liquid to the outside, and following plug bodies each of which reaches the drainage port while being guided by a flow of the flowing liquid when the flowing liquid flows in and closes the drainage port;
a recirculation chamber provided to be continuous with the drainage chamber and including a connecting means that connects a jetting means to jet the flowing liquid, and filtering sections that communicate with each of the plurality of compartment chambers between the recirculation chamber and the drainage chamber and filter the flowing liquid which has flowed in from the compartment chambers; and
a jetting section connected to the recirculation chamber in a liquid-tight manner and including a jet hole.

6. A filtering method comprising:
a step of closing a liquid passage hole selected at random among a plurality of liquid passage holes and obstructing a flowing liquid from flowing into a compartment chamber that corresponds to the closed liquid passage hole and corresponds to a filtering section to be cleaned;
a step of filtering the flowing liquid flowing into a compartment chamber other than the compartment chamber corresponding to the filtering section to be cleaned, by the filtering section provided in the other compartment chamber; and
a step of flowing the flowing liquid into the compartment chamber corresponding to the filtering section to be cleaned through the filtering section of the compartment chamber corresponding to the filtering section to be cleaned by a liquid pressure of the flowing liquid distributed to the other compartment chamber and discharging filter residue that fell off the filtering section to the outside together with the flowing liquid from the drainage port of the compartment chamber corresponding to the filtering section to be cleaned.

7. The filtering method according to Claim 6, comprising:
a step of feeding water to pass the flowing liquid through the respective compartment chambers and the respective filtering sections by closing the drainage port of the compartment chamber corresponding to the filtering section to be cleaned.
